# EUROPEAN PATENT SPECIFICATION

(11) **EP 1 633 535 B1**
(45) Date of publication and mention of the grant of the patent: **03.12.2008**
(21) Application number: 04736722.2
(22) Date of filing: 11.06.2004
(51) Int. Cl.: B25J 19/00, B25J 17/02, H02G 11/00, F16L 3/00

(54) **A DEVICE IN AN INDUSTRIAL ROBOT TO PROTECT CABLING ARRANGED TO BE PULLED THROUGH ROBOT PARTS**
VORRICHTUNG IN EINEM INDUSTRIEROBOTER ZUM SCHUTZ VON ZUM DURCHZIEHEN DURCH ROBOTERTEILE ANGEORDNETEN KABELN
DISPOSITIF DISPOSE DANS UN ROBOT INDUSTRIEL POUR PROTEGER UN CABLAGE CONFIGURE POUR POUVOIR ETRE TIRE A TRAVERS DES PARTIES DE ROBOT

(30) Priority: 13.06.2003 SE 0301784
(43) Date of publication of application: 15.03.2006
(73) Proprietor: ABB AB, 721 83 Västerås (SE)
(72) Inventor: THULIN, Mats, S-723 36 VÄSTERAS (SE); WELEN, Stefan, S-745 45 ENKÖPING (SE)
(86) International application number: PCT/SE2004/000919
(87) International publication number: WO 2004/110704

(56) References cited:
- EP-A1- 0 756 918
- US-A1- 2001 052 564
- US-B1- 6 288 512

## Description

### TECHNICAL FIELD

The present invention relates to an industrial robot. More precisely, the invention relates to a device in a wrist housing for a robot arm in such an industrial robot. The robot arm comprises a wrist comprising a turn disc which, in turn, comprises a toolholder. The turn disc is rotatable relative to the wrist. The toolholder is adapted for attachment of a tool. When attaching a tool to the toolholder, cabling is arranged to the tool. The invention relates particularly to a protective device for the cabling.

### BACKGROUND ART

An industrial robot is composed of interconnected robot parts such as, for example, a stand, robot arms, an arm housing, a wrist and a turn disc. Two adjoining robot parts are connected to each other so as to be rotatable in relation to each other around an axis of rotation, or are linearly displaceable in relation to each other.

The cabling is here primarily intended to comprise process cabling. Cabling may also be intended to comprise power supply for driving motors that drive the rotational movements of the robot. Cabling may also comprise control cabling for controlling the robot. In addition to this, cabling may also comprise spare circuits for the specific needs of the customer.

Process cabling is here intended to comprise cables for power and signals, conduits for fluids and gases, and sometimes also an empty bendable protective casing, which is arranged for future laying of one or more conduits and cables. Process cabling transports process media, such as electricity, water and air, to the tool. Process cabling is space-demanding and stiff.

The outer arm of an industrial robot must often pass through narrow passages and work in narrow spaces. When utilizing welding robots, for example, it is common for the process cabling to be pulled outside of the robot. For welding operations in, for example, the car industry, the robot must reach into narrow spaces in a car body to perform welding. If the process cabling then runs freely outside the robot, there is a risk of the cabling getting hooked up in structural parts of the car body, especially where the process cabling runs unprotected around the wrist and the tool of the robot. Hooking of the cabling in turn leads to damage to the cabling and unintentional service interruption, which has an injurious effect on the production.

Problems arise when the work to be carried out by the robot requires that robot parts articulately connected to one another simultaneously rotate and bend relative to one another. Cabling connected to the industrial robot and disposed so that it passes said robot parts will then be subjected to a simultaneous rotation and bending. During simultaneous bending and rotation of cabling, the individual lines are subjected to elastic elongation and torsion. Since the robot moves in repetitive cycles, this takes place all the time at the same locations in the cabling. Cabling offers great resistance to simultaneous rotation about two axes perpendicular to each other. This results in mechanical stresses on the cabling, which increases the risk of fatigue breakdown of the cabling. The mechanical stresses may also lead to breaking of the individual lines and cables in the cabling. The individual lines and cables are made of different materials depending on their function. In positions where the elongation and the torsion of the cabling is considerable, undesired wear on the individual lines and cables occurs as well. The service life of the individual lines and cables is thus dependent partly on their geometrical location in the cabling.

It is thus desirable to protect cabling from fatigue breakdown. The cabling is subjected to elongation and torsion in connection with the repetitive movements of the robot. The cabling should withstand the stresses occurring on the cabling upon the movements arising when the cabling is disposed with respect to passage past one of the axes of the robot.

WO 00/37224 describes an industrial robot with a robot arm. From this publication it is known to place control means for controlling cabling internally of a robot arm. The cabling is disposed extending through a protective casing in the form of a bellows. The object is to accommodate cabling in a compact and space-saving manner, and protected from fouling. However, a bellows is sensitive to stresses, especially if the bellows is subjected to stresses from shearing forces that arise if subjected to torsional movements.

US 4,499,784 describes an industrial robot with a robot arm comprising a turn disc with a tool. From this publication it is known to arrange cabling internally of a wrist housing. The object is to achieve a robot wrist with a rounded shape. However, also in this case, a bellows is utilized to house cabling for the purpose of rotating the turn disc. This is an unwieldy solution that is not suitable for precision work. To transmit a sufficient torque to the turn disc, the bellows must be given a large dimension, and the wall of the bellows must be given a strong cross section, which makes the bellows stiff and inelastic and, in addition, bulky. In addition to this, a bellows is cost-demanding since it is more expensive to manufacture and must be replaced more often.

US 6,288,512 teaches a robot has a plurality of components which can pivot relative to each other, in particular robot arms. Changes in separation between individual points of the robot thereby occur. This must be taken into consideration when guiding the operation cables for robot elements and in particular robot tools. The cables must be capable of accommodating length changes while being loaded to as little extent as possible during motion of the robot so that they have high durability and are not prematurely damaged. In accordance with the invention, a robot having cables extending at least partially on the outside, in particular operation cables for robot tools such as a welding tool, has cables guided in a substantially circular loop at the height of a robot arm which can pivot about an axis of the robot.

It is desirable, among other things because of the expense, to provide an industrial robot in which cabling is arranged in a compact/space-saving and protected manner. An additional wish is to arrange the cabling so that it can be bent and rotated a large number of times in a controlled manner without being subjected to unreasonable wear.

In the robot industry, in industrial robots with a large mobility of the tool, there is thus a need to arrange the cabling inside the robot in a way that provides a long service life for cabling which is subjected to frequent simultaneous elongation and torsion.

### SUMMARY OF THE INVENTION

It is an object of the invention to provide a device in an industrial robot intended to protect cabling, which device causes a gentle load on cabling and hence extends the life of the cabling. It is a further object to transmit a rotational movement between robot parts independently of the fact that the robot parts at the same time bend relative to one another. while at the same time being subjected to considerable bending.

The device is arranged in an industrial robot for controling cabling comprising a plurality of cores. The cabling is pulled through a first and a second robot part. The robot parts are movably arranged for both rotation and bending relative to each other. The device comprises a casing surrounding the cabling. The device comprises a first control member arranged at one end of the casing and a second control member arranged at the other end of the casing. The control members are adapted to fix the cores included in the cabling in a radial direction. Armouring the casing between the control members is designed to essentially preserve the cross section of the casing upon a relative movement of the robot parts. The casing and the armouring are adapted, upon relative movement of the robot parts, to cooperate to convert a rotation of the first control member into synchronous rotation of the second control member. In this way, the cores extending through the control members and the casing are subjected to bending only.

The device is arranged in a torsionally rigid manner by reinforcing the casing with armouring. Since the device is torsionally rigid, it is suitable for transmitting a rotation from one end to the other end thereof. The device converts, essentially synchronously, a rotation of the first control member into synchronous rotation of the second control member. The device thus transmits a torque from the first control member to the second control member.

The cabling is disposed so as to extend through each of the two control members. As a result of this, the cabling is fixed radially while at the same time it is longitudinally movable. In this way, the rotational movements of the cabling are distributed from the first control member to the second control member. It is part of the inventive concept that lines and cables included in the cabling are arranged essentially symmetrically next to each other through each of the control members or with some other orientation that facilitates the rotational movement. When the cabling is alternately bent and stretched, changes in length occur, but since the cabling and the individual cables and lines are allowed to move longitudinally within the casing, they will accompany the casing in its movements. During this combined rotational movement and bending movement, the rotational movement and the bending movement are divided across the cabling. A first part of the cabling, which is inside the device, is subjected to the bending movement. A second part of the cabling, which is outside the device, is then subjected to the rotational movement. The rotating movement is often carried out at a high velocity, which means that the individual parts of the cabling must be flexible relative to one another. In addition, the cabling is often extensive, which requires a structured location. It may also occur that individual cables have a large diameter. The service life of the cabling increases when the cabling is treated in a gentle manner with torque relief. Cabling in an industrial robot may offer considerable rotational resistance, which means that large shearing forces are created.

By the term flexible is meant here that the casing is elastic in its longitudinal direction in such a way that the diameter and cross section of the casing is essentially shape permanent. The inside of the casing is preferably even and sooth.

In a preferred embodiment of the invention, said armouring comprises a helical spring. A spiral is acting in the same direction as the shear forces when rotating the spiral in one direction, which results in a tensile stress. When rotating the spiral in the other direction, the shear forces are acting to reduce the spiral diameter of the spiral, which results in compressive stress.

In another embodiment of the invention, the helical spring is cast into the flexible casing, as an armouring of the casing. In this way, a stabilized helical spring is resistant to deformation and retains its circumference, the spiral diameter, upon simultaneous rotation and bending about two axes. The helical spring is prevented from expanding and contracting, respectively, upon torsional load by the flexible casing preventing the movement. During bending, the flexibility of the casing causes it to absorb the small changes in length that occur between, respectively, the inner and outer radius of curvature of the helical spring. Since the helical spring is part of an armouring of the casing, the helical spring essentially retains its location relative to itself in the casing during the combined rotational movement and bending movement.

In a further embodiment of the invention, said device essentially retains its cross section during simultaneous bending and rotation. This means that the device is shape permanent both when being subjected to subatmospheric pressure and to overpressure.

In still another advantageous embodiment, said first robot part comprises a turn disc. When the robot is working, the turn disc is rotating. This means that cabling connected to the turn disc, such as process cabling, accompanies the wrist during rotation thereof about the centre axis of the wrist. The first control member is connected to the turn disc and the second control member is disposed in the first robot arm. Further, the casing is also arranged to extend through the wrist housing. Transmission of torque takes place from the first control member to the second control member. The second control member is rotatably arranged about the centre axis of the robot arm but fixed to a given interface of the first robot arm. The torque transmission occurs from the turn disc and backwards into the robot arm. The device according to the invention converts the rotating torque from the turn disc past the bending of the wrist into a rotation of the second control member inside the robot arm. The casing converts the rotation of the turn disc into a rotation of the second control member. That part of the cabling that is between the turn disc and the robot arm, in the wrist housing, is subjected to the rotational movement. The other part of the cabling that is inside the robot arm, before the wrist housing viewed from the power source, is subjected to the rotational movement. The design makes possible a bending of the wrist that exceeds a perpendicular bending.

In an alternative embodiment according to the preceding embodiment, the second control member is rotatably arranged about the centre axis of the wrist housing, but is able to move along a limited section of the first robot arm between two stop positions in the form of, for example, pins.

In yet another preferred embodiment of the invention, said first robot part comprises a foot.

In still another preferred embodiment of the invention, said control members are detachably arranged.

In a still further preferred embodiment of the invention, the casing includes a fold between helical turns formed from the armouring. This increases the mobility of the casing.

In an additional preferred embodiment of the invention, the rotation is transmitted by means of shear forces.

A casing of a stiff material that withstands the transmission of torque does not manage at the same time to be bent without being greatly deformed. A single helical spring without a casing is not sufficiently torsionally rigid to manage to transmit a sufficient torque. Nor does a casing of a soft flexible material that withstands being bent in the manner described above, for example a hose, manage to transmit sufficient torque. In addition, a soft material without armouring has a considerably shorter service life when being subjected to torque than a material with armouring. The softer the material, the more asynchronous the rotational movement, until the casing finally collapses. Because the casing is armoured, it becomes more resistant. Because the casing is armoured, it also becomes more rigid with respect to torsion. In addition, a casing with armouring also becomes essentially shape permanent. The armouring preferably extends through the casing.

A bellows consists of folded sections of a thin material distended by thin units of an essentially circular or rectangular shape of a hard material, said units being formed with alternately small and large diameters. A bellows consists of a thin material. A bellows is designed to take up longitudinal differences. The bellows bursts if one end thereof is twisted in relation to the other end while at the same time being stretched. If the torsional movement is too large, the bellows will collapse.

In a device according to the invention, the flexible material is arranged to be torsionally rigid by casting an armouring, such as a torsion spring, into the casing. This stabilizes the casing and prevents collapsing thereof. The device is hence capable of transmitting a torque. A helical spring cast into a flexible casing hence transmits a larger torsional moment than a bellows.

One advantage of placing the cabling in a casing, comprising a helical spring, is that the casing may be made transparent, which simplifies ocular inspection of the cabling.

Still another advantage of an internal location of the cabling inside a casing is that this is a space-saving solution.

Advantageous further developments of the invention will become clear from the following description and claims.

### BRIEF DESCRIPTION OF THE DRAWINGS

The invention will be explained in greater detail, by description of embodiments, with reference to the accompanying drawings, wherein:
- Figure 1: is an industrial robot according to the state of the art,
- Figure 2: is a preferred embodiment of.a device according to the invention,
- Figure 3: is a wrist housing comprising a device according to the invention,
- Figure 4: is the above-mentioned embodiment of a device according to the invention, comprising cabling, and
- Figure 5: is an industrial robot comprising a preferred embodiment of a device according to the invention.

### DESCRIPTION OF THE PREFERRED EMBODIMENTS

The following description relates both to the method and to the device.

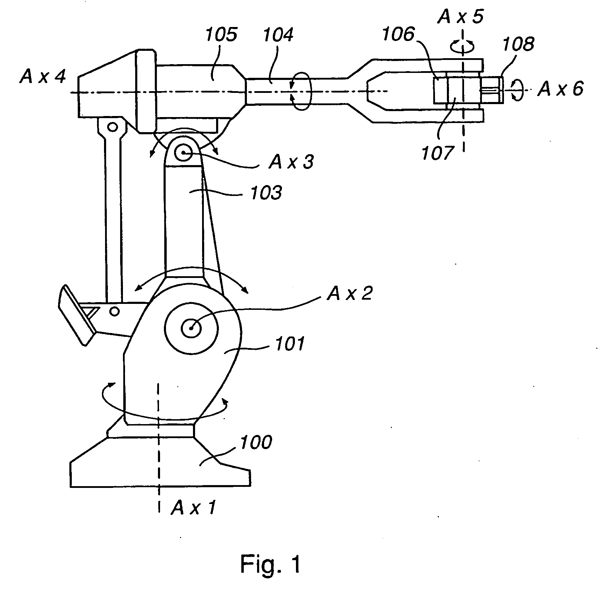

Figure 1 shows an embodiment of an industrial robot according to the prior art. The industrial robot comprises a foot 100, a stand 101, a first robot arm 103, a second robot arm 104, an arm housing 105, a wrist housing 106, a wrist 107, and a turn disc 108.

The foot 100 of the industrial robot is stationarily mounted to a base. The foot supports the stand 101, which is rotatably arranged in relation to the foot about a first axis Ax1. The stand supports the first robot arm 103. The first robot arm is rotatable in relation to the stand about a second axis A2. The first robot arm supports the arm housing 105. The arm housing is rotatable in relation to the first robot arm about a third axis Ax3. The arm housing supports the second robot arm 104. The second robot arm is rotatable in relation to the arm housing about a fourth axis Ax4, which coincides with the longitudinal axis of the second robot arm. The second robot arm comprises the wrist housing 106. The wrist housing supports the wrist 107. The wrist is rotatable in relation to the wrist housing about a fifth axis Ax5. The wrist supports the turn disc 108, which is rotatably arranged about a sixth axis Ax6. The turn disc comprises a toolholder. The toolholder is adapted for attachment of a tool.

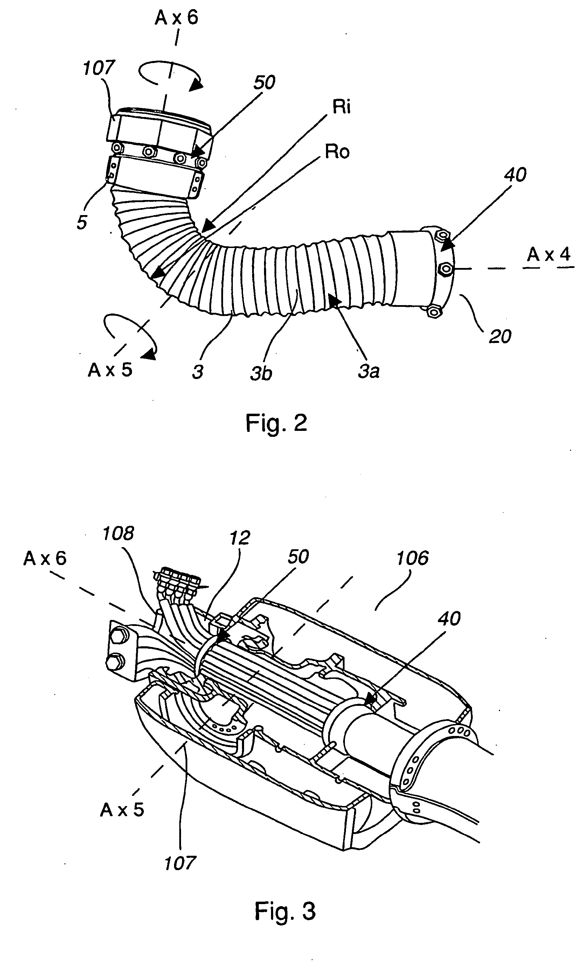

Figure 2 shows an exploded view of a preferred embodiment of a device according to the invention, comprising a casing 3a with a through passage. The casing comprises a first control member 50 and a second control member 40, which are concealed in the figure, as well as a first fastening device 4 and a second fastening device 5. The casing 3a comprises armouring 3b, such as a helical spring in this case. The casing is adapted to receive and accommodate continuous cabling. The helical spring has an outer radius of curvature Ro and an inner radius of curvature Ri.

Figure 3 shows an exploded view of a preferred embodiment of a device according to the invention, a wrist housing 106 arranged to the outer part of a second hollow robot arm in an industrial robot of the type described above, a wrist 107, a turn disc 108, a first control member 50, a second control member 40, and cabling 12. The casing has been removed for the purpose of exposing the cabling.

The wrist housing 106 supports the wrist 107. The wrist supports the turn disc 108. In the hollow second robot arm which is rotatable about its longitudinal axis, the cabling is arranged internally of the robot arm, extending through the first control member 50 and the second control member 40. In this case, the cabling is process cabling. In the wrist housing, said process cabling is arranged internally through the centre axis of the wrist. In addition, the process cabling is arranged to be fixed to the turn disc and to the remote end of the upper robot arm (not shown), which end is supported by the first robot arm.

The first control member is arranged at the turn disc 108 and accompanies the disc during rotation. The second control member is rotatably arranged at the first robot arm 103 about the centre axis of the robot arm, but fixed to a given cross section of the first robot arm. The control members are intended for entry and control of cabling. The first fastening device 4 is arranged to fasten the device to the turn disc and the first control member 40. The second fastening device 5 is arranged to be fixed to the second control member 50. The cabling 12 is arranged to be fixed to the turn disc. The turn disc has a centrally placed cavity, through which the cabling passes. The cabling is here arranged as a bundle of cables and lines. The cabling is connected to the turn disc and the control members, respectively, with a mutual orientation that is retained. The continuous cabling is arranged to run axially fixed, but longitudinally free in continuous openings arranged in the control members. The cabling is uniformly distributed so as to pass through the respective cross sections of both control members. The turn disc rotates about the sixth axis Ax6, which, without bending the wrist of the robot, coincides with the fourth axis Ax4. Thus, the cabling extends freely from the first control member via the second control member to a fixed connection in the first robot arm.

The torsionally rigid armouring in the form of a helical spring stabilizes the torsionally rigid flexible casing. The casing is made of, for example, polyurethane. The helical spring is made, for example, of metal or rigid plastic.

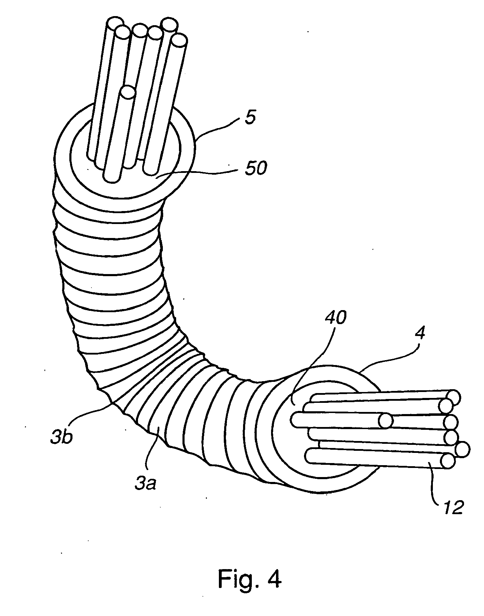

Figure 4 shows the above-mentioned embodiment of the invention comprising a casing 3 and continuous cabling 12. The first control member 50 is arranged at one end of the casing inside the first fastening device 4 and the second control member 40 is arranged inside the second fastening device 5 at the other end of the casing.

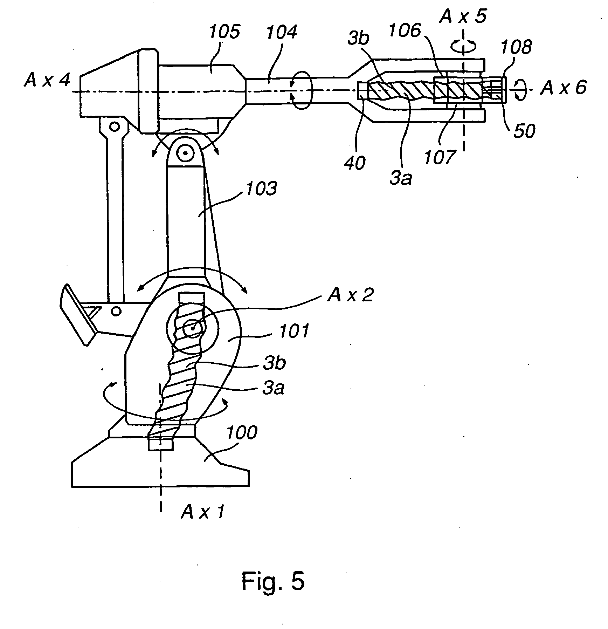

Figure 5 shows an industrial robot comprising two devices for controlling cabling according to a preferred embodiment of the invention. The first device is mounted to the turn disc 108 and divides the rotational movement about the sixth axis Ax6 and the bending movement about the fifth axis Ax5. The first device is mounted to the foot 100 which supports a stand 101 and divides the rotational movement about the first Ax1 and the bending movement about the second axis Ax2.

The invention is not limited to the embodiment shown but a person skilled in the art may, of course, modify it in several ways within the scope of the invention as defined in the claims. Thus, in a further embodiment, a casing or extra flexible materials is utilized, such as nylon, which has a certain resilience with regard to the rotation from one end of the casing to the other. This is utilized in applications where high precision is not necessary, but where still a considerable torque must be transmitted. An additional helical spring, with a helix angle opposite to that of the armoured helical spring, may also be utilized as a casing. The casing may also be arranged as a netting. The armouring may also include closed rings, which are not connected to each other.

The areas of application are in processes comprising welding, such as arc welding and spot welding, as well as machining, casting and sorting.

## Claims

1. A device in an industrial robot for controlling cabling (12), comprising a plurality of cores, which is pulled through a first (108, 100) and a second robot part ( 101, 103, 105, 104, 106, 107), said robot parts being movably arranged for both rotation and bending relative to one another, said device comprising a casing (3a) surrounding the cabling, **characterized in that** the device comprises a first control member (50) arranged at one end of the casing, a second control member (40) arranged at the other end of the casing, said control members being designed to fix the cores included in the cabling in a radial direction, that an armouring (3b) in the casing between the control members is adapted to essentially retain the cross section of the casing upon relative movement of the robot parts, that the first control member (50) is connected to the first robot part (108, 100) and the second control member (40) is disposed in the first robot arm and that the casing and the armouring are arranged, during relative movement of the robot parts, to cooperate for transmitting a rotation of the first robot part (108, 100) into an essentially synchronous rotation of the second control member (40) so that the cores extending through the control members and the casing are subjected to bending only.

2. A device according to claim 1, wherein said armouring comprises a helical spring.

3. A device according to claim 2, wherein the helical spring is cast inside the flexible casing.

4. A device according to any of claims 1-3, wherein the rotation is transmitted by means of shear forces.

5. A device according to any of claims 1-4, wherein said first robot part comprises a turn disc (108).

6. A device according to any of claims 1-4, wherein said first robot part comprises a foot (100).

7. A device according to any of claims 1-6, wherein said control members are detachably arranged.

8. A robot wrist, **characterized in that** the robot wrist comprises a device according to any of claims 1-7.

9. A robot arm, **characterized in that** the robot arm comprises a device according to any of claims 1-7.

10. An industrial robot, **characterized in that** the industrial robot comprises a device according to any of claims 1-8 and cabling housed in the device.

11. A method of controlling a cabling (12) in an industrial robot comprising a first (108, 100) and a second robot part (101, 103, 105, 104, 106, 107) arranged for relative movement, said cabling comprises a plurality of cores and is pulled through the first (108, 100) and the second robot part (101, 103, 105, 104, 106, 107), the robot further comprises a device with a casing (3a), a first (50) and a second control member (40) through which the cores are arranged extending, where said first control member is connected to the first robot part (108, 100) and arranged to fix the cores in a radial direction at one end of the casing, the second control member (40) is arranged to fix the cores in a radial direction at the other end of the casing, wherein the casing is provided with an armouring (3b) designed to essentially retain the cross section of the casing during simultaneous relative rotation and bending of the robot parts, the method comprising rotation of the first robot part (108, 100) and the connected first control member (50), transmitting the rotation of the first control member into an essentially synchronous rotation of the second control member by the casing (3a) and the armouring (3b), during said rotation, the casing (3a) and the armouring (3b) are brought to permit the simultaneous relative bending movement, such that the casing and the cores in there are subjected only to the bending movements during operation of the robot.

12. A method according to the preceding claim, wherein said armouring is adapted to comprise a helical spring.

13. A method according to claim 12, wherein the helical spring is arranged to be cast into the flexible casing.

14. A method according to any of claims 11-13, wherein the rotation is transmitted by means of shear forces.

15. A method according to any of claims 11-14, wherein the first robot part is adapted to comprise a turn disc (108).

16. A method according to any of claims 11-14, wherein said first robot part is adapted to comprise a foot.

17. A method according to any of claims 11-16, wherein said control members are arranged to be detachable.

18. Use of a device according to any of claims 1-7, or a method according to any of claims 11-17, in an industrial robot, such as a torque transmitter.

## Patentansprüche

1. Vorrichtung in einem Industrieroboter zum Steuern von Verkabelung (12), umfassend mehrere Kerne, die durch einen ersten (108, 100) und einen zweiten Roboterteil (101, 103, 105, 104, 106, 107) gezogen sind, wobei die Roboterteile beweglich sowohl für Rotation als auch Beugung in Bezug auf einander angeordnet sind, wobei die Vorrichtung ein Gehäuse (3a) umfasst, das die Verkabelung umgibt;
**dadurch gekennzeichnet,**
**dass** die Vorrichtung umfasst
ein erstes Steuerelement (50), das an einem Ende des Gehäuses angeordnet ist;
ein zweites Steuerelement (40), das an dem anderen Ende des Gehäuses angeordnet ist;
wobei die Steuerelemente ausgelegt sind, um die Kerne, die in der Verkabelung enthalten sind, in einer radialen Richtung zu fixieren;
**dass** eine Armierung (3b) in dem Gehäuse zwischen den Steuerelementen angepasst ist, um bei einer Bewegung der Roboterteile in Bezug aufeinander den Querschnitt des Gehäuses im Wesentlichen aufrechtzuerhalten;
**dass** das erste Steuerelement (50) mit dem ersten Roboterteil (108, 100) verbunden ist; und
**dass** das zweite Steuerelement (40) in dem ersten Roboterarm angeordnet ist; und
**dass** das Gehäuse und die Armierung eingerichtet sind, um während einer Bewegung der Roboterteile in Bezug aufeinander zusammenzuwirken, um eine Rotation des ersten Roboterteils (108, 100) in eine im Wesentlichen synchrone Rotation des zweiten Steuerelements (40) zu übertragen, so dass die Kerne, die sich durch die Steuerelemente und das Gehäuse erstrecken, nur Beugung ausgesetzt werden.

2. Vorrichtung nach Anspruch 1, wobei die Armierung eine Schraubenfeder umfasst.

3. Vorrichtung nach Anspruch 2, wobei die Schraubenfeder in dem flexiblen Gehäuse eingegossen ist.

4. Vorrichtung nach irgendeinem der Ansprüche 1 bis 3, wobei die Rotation mittels Scherkräften übertragen wird.

5. Vorrichtung nach irgendeinem der Ansprüche 1 bis 4, wobei der erste Roboterteil eine Drehscheibe (108) umfasst.

6. Vorrichtung nach irgendeinem der Ansprüche 1 bis 4, wobei der erste Roboterteil einen Fuß (100) umfasst.

7. Vorrichtung nach irgendeinem der Ansprüche 1 bis 6, wobei die Steuerelemente abnehmbar angeordnet sind.

8. Roboterhandgelenk, **dadurch gekennzeichnet, dass** das Roboterhandgelenk eine Vorrichtung nach irgendeinem der Ansprüche 1 bis 7 umfasst.

9. Roboterarm, **dadurch gekennzeichnet, dass** der Roboterarm eine Vorrichtung nach irgendeinem der Ansprüche 1 bis 7 umfasst.

10. Industrieroboter, **dadurch gekennzeichnet, dass** der Industrieroboter eine Vorrichtung nach irgendeinem der Ansprüche 1 bis 8 und in der Vorrichtung eingeschlossene Verkabelung umfasst.

11. Verfahren zum Steuern einer Verkabelung (12) in einem Industrieroboter umfassend einen ersten (108, 100) und einen zweiten Roboterteil (101, 103, 105, 104, 106, 107), eingerichtet für eine Bewegung in Bezug aufeinander, wobei die Verkabelung mehrere Kerne umfasst und durch den ersten (108, 100) und den zweiten Roboterteil (101, 103, 105, 104, 106, 107) gezogen ist, wobei der Roboter weiter umfasst
eine Vorrichtung mit einem Gehäuse (3a);
ein erstes (50) und ein zweites Steuerelement (40), wobei die Kerne sich hindurch erstreckend angeordnet sind;
wobei das erste Steuerelement mit dem ersten Roboterteil (108, 100) verbunden ist und eingerichtet ist, die Kerne in radialer Richtung an einem Ende des Gehäuses zu fixieren;
wobei das zweite Steuerelement (40) eingerichtet ist, die Kerne in radialer Richtung an dem anderen Ende des Gehäuses zu fixieren;
wobei das Gehäuse mit einer Armierung (3b) versehen ist, die dazu ausgelegt ist, während gleichzeitiger Rotation und Beugung der Roboterteile in Bezug aufeinander den Querschnitt des Gehäuses im Wesentlichen aufrechtzuerhalten;
wobei das Verfahren umfasst
Drehen des ersten Roboterteils (108, 100) und des verbundenen ersten Steuerelements (50);
Übertragen der Drehung des ersten Steuerelements in eine im Wesentlichen synchrone Drehung des zweiten Steuerelements durch das Gehäuse (3a) und die Armierung (3b);
wobei während der Drehung das Gehäuse (3a) und die Armierung (3b) dazu gebracht werden, die gleichzeitige gegenseitige Beugungsbewegung zu gestatten, so dass das Gehäuse und die Kerne darin während des Betriebs des Roboters nur den Beugungsbewegungen ausgesetzt werden.

12. Verfahren gemäß dem vorhergehenden Anspruch, wobei die Armierung dazu angepasst ist, eine Schraubenfeder zu umfassen.

13. Verfahren nach Anspruch 12, wobei die Schraubenfeder dazu eingerichtet ist, in das flexible Gehäuse eingegossen zu werden.

14. Verfahren nach irgendeinem der Ansprüche 11 bis 13, wobei die Drehung mittels Scherkräften übertragen wird.

15. Verfahren nach irgendeinem der Ansprüche 11 bis 14, wobei das erste Roboterteil dazu angepasst ist, eine Drehscheibe (108) zu umfassen.

16. Verfahren nach irgendeinem der Ansprüche 11 bis 14, wobei der erste Roboterteil dazu angepasst ist, einen Fuß zu umfassen.

17. Verfahren nach irgendeinem der Ansprüche 11 bis 16, wobei die Steuerelemente dazu eingerichtet sind, abnehmbar zu sein.

18. Verwendung einer Vorrichtung nach irgendeinem der Ansprüche 1 bis 7 oder eines Verfahrens nach irgendeinem der Ansprüche 11 bis 17 in einem Industrieroboter, wie etwa einem Drehmomentüberträger.

## Revendications

1. Dispositif disposé dans un robot industriel pour contrôler un câblage (12), comprenant une pluralité d'âmes, qui est tiré à travers une première (108, 100) et une deuxième partie de robot (101, 103, 105, 104, 106, 107), lesdites parties de robot étant agencées de façon mobile à la fois pour une rotation et une flexion les unes par rapport aux autres, ledit dispositif comprenant un boîtier (3a) entourant le câblage, **caractérisé en ce que** le dispositif comprend un premier élément de contrôle (50) agencé à une extrémité du boîtier, un deuxième élément de contrôle (40) agencé à l'autre extrémité du boîtier, lesdits éléments de contrôle étant conçus de manière à fixer les âmes incluses dans le câblage dans une direction radiale, **en ce qu'**une armature (3b) dans le boîtier entre les éléments de contrôle est adaptée à retenir essentiellement la section transversale du boîtier lors d'un mouvement relatif des parties du robot, **en ce que** le premier élément de contrôle (50) est relié à la première partie de robot (108, 100) et le deuxième élément de contrôle (40) est disposé dans le premier bras de robot et **en ce que** le boîtier et l'armature sont agencés, durant un mouvement relatif des parties du robot, de façon à coopérer pour transmettre une rotation de la première partie de robot (108, 100) en une rotation essentiellement synchrone du deuxième élément de contrôle (40) de sorte que les âmes s'étendant à travers les éléments de contrôle et le boîtier ne sont soumis qu'à une flexion.

2. Dispositif selon la revendication 1, dans lequel ladite armature comprend un ressort hélicoïdal.

3. Dispositif selon la revendication 2, dans lequel le ressort hélicoïdal est moulé à l'intérieur du boîtier souple.

4. Dispositif selon l'une quelconque des revendications 1 à 3, dans lequel la rotation est transmise au moyen de forces de cisaillement.

5. Dispositif selon l'une quelconque des revendications 1 à 4, dans lequel ladite première partie de robot comprend un disque rotatif (108).

6. Dispositif selon l'une quelconque des revendications 1 à 4, dans lequel ladite première partie de robot comprend un pied (100).

7. Dispositif selon l'une quelconque des revendications 1 à 6, dans lequel lesdits éléments de contrôle sont agencés de manière détachable.

8. Poignet de robot, **caractérisé en ce que** le poignet de robot comprend un dispositif selon l'une quelconque des revendications 1 à 7.

9. Bras de robot, **caractérisé en ce que** le bras de robot comprend un dispositif selon l'une quelconque des revendications 1 à 7.

10. Robot industriel, **caractérisé en ce que** le robot industriel comprend un dispositif selon l'une quelconque des revendications 1 à 8 et un câblage logé dans le dispositif.

11. Procédé pour contrôler un câblage (12) disposé dans un robot industriel, comprenant une première (108, 100) et une deuxième partie de robot (101, 103, 105, 104, 106, 107) agencées pour un mouvement relatif, ledit câblage comprend une pluralité d'âmes et il est tiré à travers la première (108, 100) et la deuxième partie de robot (101, 103, 105, 104, 106, 107), le robot comprend en outre un dispositif avec un boîtier (3a), un premier (50) et un deuxième élément de contrôle (40) à travers lesquels sont agencés les âmes en extension, où ledit premier élément de contrôle (50) est relié à la première partie de robot (108, 100) et agencé de manière à fixer les âmes dans une direction radiale à une extrémité du boîtier, le deuxième élément de contrôle (40) est agencé de manière à fixer les âmes dans une direction radiale à l'autre extrémité du boîtier, dans lequel le boîtier est muni d'une armature (3b) conçue pour retenir essentiellement la section transversale du boîtier durant une rotation et une flexion relative simultanée des parties du robot, le procédé comprenant
la rotation de la première partie de robot (108, 100) et du premier élément de contrôle relié (50),
la transmission de la rotation dudit premier élément de contrôle en une rotation essentiellement synchrone du deuxième élément de contrôle par le boîtier (3a) et l'armature (3b),
durant ladite rotation, le boîtier (3a) et l'armature (3b) sont ramenés de manière à permettre le mouvement de flexion relative simultanée, de sorte que le boîtier et les âmes à l'intérieur ne sont soumis qu'au mouvement de flexion durant le fonctionnement du robot.

12. Procédé selon la revendication précédente, dans lequel ladite armature est adaptée à comprendre un ressort hélicoïdal.

13. Procédé selon la revendication 12, dans lequel le ressort hélicoïdal est agencé de manière à être moulé dans le boîtier souple.

14. Procédé selon l'une quelconque des revendications 11 à 13, dans lequel la rotation est transmise au moyen de forces de cisaillement.

15. Procédé selon l'une quelconque des revendications 11 à 14, dans lequel la première partie de robot est adaptée à comprendre un disque rotatif (108).

16. Procédé selon l'une quelconque des revendications 11 à 14, dans lequel ladite première partie de robot est adaptée à comprendre un pied.

17. Procédé selon l'une quelconque des revendications 11 à 16, dans lequel lesdits éléments de contrôle sont agencés de manière à être détachables.

18. Utilisation d'un dispositif selon l'une quelconque des revendications 1 à 7 ou d'un procédé selon l'une quelconque des revendications 11 à 17 dans un robot industriel, tel qu'un transmetteur de couple.
